(19) Europäisches Patentamt / European Patent Office / Office européen des brevets

(11) **EP 3 452 957 B1**

(12) **FASCICULE DE BREVET EUROPEEN**

(45) Date de publication et mention
de la délivrance du brevet:
**30.06.2021 Bulletin 2021/26**

(51) Int Cl.:
***G06K 19/077*** *(2006.01)* ***G06K 19/07*** *(2006.01)*
***H01Q 1/22*** *(2006.01)*

(21) Numéro de dépôt: **16727741.7**

(22) Date de dépôt: **01.05.2016**

(86) Numéro de dépôt international:
**PCT/FR2016/000082**

(87) Numéro de publication internationale:
**WO 2017/191372 (09.11.2017 Gazette 2017/45)**

(54) **ANTENNE AMÉLIORÉE POUR CARTE À PUCE SANS CONTACT**

VERBESSERTE ANTENNE FÜR KONTAKTLOSE CHIPKARTE

IMPROVED ANTENNA FOR CONTACTLESS CHIP CARD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**13.03.2019 Bulletin 2019/11**

(73) Titulaire: **Smart Packaging Solutions (SPS)
13790 Rousset (FR)**

(72) Inventeurs:
• **MEAR, Benjamin
13790 Rousset (FR)**

• **KAMBOURIAN Haig
13790 Rousset (FR)**
• **GERIN, Guillaume
13790 Rousset (FR)**

(74) Mandataire: **Nicolle, Olivier
Ipon Global
29, boulevard Georges Seurat
92200 Neuilly-sur-Seine (FR)**

(56) Documents cités:
EP-A1- 1 324 506  EP-A1- 2 128 804
EP-A1- 2 173 009  WO-A2-2008/038170
FR-A1- 3 028 074  US-A1- 2012 001 814

## Description

L'invention concerne une nouvelle antenne pour carte à puce à fonctionnement sans contact ou pour une carte à puce à fonctionnement mixte à contact et sans contact, apte à fonctionner à des débits plus élevés que les cartes sans contact habituelles, tout en présentant par ailleurs des performances de communication non dégradées.

## Etat de la technique

Il existe déjà dans l'état de la technique des cartes à puce à fonctionnement sans contact ou à fonctionnement mixte à contact et sans contact, capables de communiquer par voie radiofréquence avec un lecteur de cartes à puce situé à distance.

Typiquement, ces cartes à puce comportent une antenne au format dit ID1, présentant des spires ayant sensiblement la taille du corps de carte, ou encore une antenne au format ID1 combinée avec une antenne concentrateur capable de concentrer le flux électromagnétique vers une antenne située sur le module microélectronique de la carte

L'antenne de la carte à puce a un schéma électrique équivalent à un circuit RLC, qui possède une fréquence de résonance proche de la fréquence de la porteuse émise par le lecteur. De façon connue, le signal utile est transmis entre la carte à puce et le lecteur par modulation de la porteuse.

Le champ électromagnétique provenant du lecteur est, du point de vue mathématique, un signal sinusoïdal à la fréquence de la porteuse, à savoir 13,56 Mhz selon la norme ISO 14443. Ce signal s'exprime donc, en fonction du temps t, sous la forme :

$p(t) = P.\cos (w_p . t)$ où $w_p$ désigne la pulsation de la porteuse et P l'amplitude du signal de la porteuse.

Les données de la carte à puce peuvent s'exprimer de façon simplifiée sous forme mathématique sous la forme d'un signal sinusoïdal d(t) à la fréquence du débit de données désiré, par exemple f = 1 Mhz :

$d(t) = D . \cos (w_d . t)$ où $w_d$ désigne la pulsation du signal et D l'amplitude du signal modulant.

La porteuse modulée par le signal s'exprime alors par :

$$e(t) = P . \cos w_p t + (½) . P . D \cos w_p t . \cos w_d t = \cos(w_p . t) + P.D/2 \cos (w_p - w_d).t + P.D/2 \cos (w_p + w_d).t$$

D'un point de vue fréquentiel, la transformée de Fourier du signal e(t) donne 3 raies d'énergie principales situées à $F_0$ = 13,56 Mhz, $F_0$ - f = 12,56 Mhz et $F_0$ + f = 14,56 Mhz, si f est égal à 1 MHz.

Comme cela est connu, la raie centrale située à $F_0$ correspond à l'énergie de la porteuse, qui conditionne la portée de communication. Les raies latérales situées à $F_0$ +f et $F_0$ - f correspondent à l'énergie disponible pour la transmission des données qui modulent la porteuse. D'autres raies latérales d'énergie décroissante sont situées à $F_0$ ± n.f et correspondent à des harmoniques du signal modulé, qui seront négligées ici.

Or, l'amplitude des raies d'énergie dépend du gabarit d'impédance de l'antenne en fonction de la fréquence : le signal rétromodulé est filtré par l'antenne, c'est-à-dire que l'amplitude des raies d'énergie est réduite à proportion de l'impédance de l'antenne, qui dépend de la fréquence du signal.

La valeur d'impédance d'une antenne qui se comporte comme un filtre passe bande, est une fonction qui décroit rapidement de part et d'autre de la fréquence de résonance $F_0$.

Il en résulte que l'impédance de l'antenne, et donc l'énergie des raies latérales disponible pour la transmission des données, décroit rapidement à mesure que la fréquence f s'éloigne de part et d'autre de la fréquence de résonance $F_0$.

Les antennes actuelles pour cartes à puce sans contact sont calculées pour une fréquence de résonance de 13,56 Mhz, et pour des raies latérales situées à 12.7 Mhz et 14.4 Mhz, conformément à la norme ISO 14443. A ces fréquences, les pertes d'énergie dans les raies centrales et latérales représentent un bon compromis entre la portée de communication de la carte à puce, et l'énergie nécessaire pour assurer le débit des données à 848 kbps.

Or, la norme ISO 14443 est amenée à évoluer et impose aux cartes à puce de communiquer à des débits plus élevés. Ceci implique un décalage des raies latérales par rapport à la raie centrale. Il en découle compte tenu du gabarit de l'antenne que l'énergie des raies latérales est amoindrie.

Afin d'augmenter l'énergie des raies latérales plus écartées de la raie centrale, il serait possible de choisir une antenne ayant un gabarit d'impédance plus écrasé, mais cela implique que la hauteur de la raie centrale soit plus faible, ce qui se ferait donc au détriment de la portée de communication de la carte à puce.

On connaît de par le document EP 2 128 804 A1 un transpondeur pourvu d'une antenne comportant une inductance et une capacité variable formée par plusieurs capacités connectées en parallèle qui peuvent être mises en circuit ou hors circuit par un commutateur commandé par un circuit de commande de la fréquence d'accord. En fonction des capacités qui sont mises en circuit, la fréquence de résonance et les fréquences des harmoniques de l'antenne sont déplacées vers des valeurs plus ou moins élevées, en fonction des besoins en matière de portée de communication et de vitesse de transmission des données. Ce document cherche également à accroître la vitesse de transmission de données entre une carte à puce et un lecteur sans contact. Mais ce résultat est recherché en optimisant au cas par cas la fréquence de résonance de l'antenne de la carte à puce en mode émission et en mode réception, grâce à un traitement impliquant de nombreux composants actifs tels que des transistors. Mais en tout état de cause, le circuit d'antenne selon ce document ne présente qu'un seul pic de résonance à chaque instant, et des circuits actifs avec une capacité d'analyse et de traitement sont utilisés pour détecter le besoin de vitesse instantanée, et pour piloter la valeur de la capacité variable pour commuter d'une fréquence de résonance à une autre en fonction des besoins de vitesse en émission ou en réception. En particulier, rien dans ce document n'indique la présence d'une antenne pourvue de plusieurs pics de résonance actifs simultanément tout en ne mettant en œuvre que des composants passifs (R,L,C).

On voit donc que la structure d'antenne classique pour carte à puce, présentant une seule fréquence de résonance et donc un seul pic d'énergie, est incompatible avec une montée en débit du signal, tel que prévu par l'évolution de la norme de communication vers des débits plus élevés.

On connaît par ailleurs de par le document US2012/0001814 A1 une antenne RFID à pics de résonance multiples, mais ces pics ne sont pas obtenus par des moyens aptes à maximiser à la fois la portée de communication radiofréquence, et le débit de communication de données entre un lecteur et l'antenne RFID.

## Buts de l'invention

Un but général de l'invention est par conséquent de proposer une nouvelle structure d'antenne pour carte à puce, apte à permettre une montée en débit de communication, sans nuire aux autres performances de communication, notamment à la portée de la communication.

## Résumé de l'invention

Dans son principe, l'invention consiste à proposer une antenne ayant simultanément des pics de résonance multiples, notamment à triple pic de résonance, à savoir une résonance au voisinage de la fréquence de la porteuse (13,56 Mhz), et deux pics de résonance au niveau des bandes latérales du spectre fréquentiel, correspondant à la transmission des données.

De cette manière, l'énergie de la porteuse correspond à un pic de résonance et est donc maximale. De même, l'énergie des raies latérales correspondant à la transmission des données correspond également à un pic de résonance et est donc également maximale.

Par ailleurs, l'invention prévoit une conception d'antenne ayant des pics de résonance multiples et ajustables, de sorte qu'il soit possible d'optimiser de façon indépendante l'énergie disponible pour la porteuse et l'énergie disponible pour les données.

Il en découle que la qualité de transmission des données ne se fait pas au détriment de la portée de la transmission.

L'invention a par conséquent pour objet une antenne pour carte à puce sans contact selon la revendication 1.

Cette antenne permet de communiquer avec un lecteur de carte à puce à l'aide d'un signal porteur de fréquence $F_0$ modulé par un signal de données de fréquence f, elle est configurée pour présenter simultanément au moins trois pics de résonance, à savoir un premier pic centré sur la fréquence de la porteuse $F_0$, et deux pics latéraux centrés sur les fréquences de transmission des données $F_0 + f$ et $F_0 - f$.

De façon plus générale, l'antenne est configurée pour présenter, pour un débit de transmission donné, au moins $1 + 2^n$ pics de résonance, à savoir un premier pic centré sur la fréquence de la porteuse $F_0$, et $2^n$ pics latéraux centrés sur les fréquences de transmission des données $F_0 + n.f$ et $F_0 - n.f$, où n représente le nombre d'harmoniques à transmettre, et « . » représente l'opérateur de multiplication.

Lorsque n = 1, on a donc 3 pics de résonance, à savoir un pic à $F_0$ correspondant à la fréquence de porteuse, et deux pics latéraux centrés sur les fréquences de transmission des données $F_0 + f$ et $F_0 - f$.

Dans le cas où il y a plusieurs débits de transmission, on pourra avoir des ensembles de deux pics correspondant à chaque débit de transmission, et dans le cas d'un signal complexe nécessitant la transmission de plusieurs harmoniques, il faudra ajouter 2.n pics avec n le nombre d'harmoniques à transmettre.

Selon un mode de réalisation de l'antenne conduisant à 3 pics de résonance, l'antenne comporte, connectés en parallèle, un premier circuit résonant (L1,C1) série, un second circuit résonant (L2,C2) parallèle, et un troisième circuit résonant (L3,C3) série.

D'autres caractéristiques et avantages de l'invention apparaîtront à la lecture de la description détaillée et des dessins annexés dans lesquels :

- la figure 1 représente le schéma équivalent d'un système d'antennes réparties entre un lecteur de carte à puce, et une carte à puce sans contact ;

- la figure 2 représente l'impédance d'une antenne de carte à puce sans contact connue, en fonction de la fréquence, ainsi que le spectre fréquentiel (les raies d'énergie) d'un signal de modulation ;
- la figure 3 représente le principe du filtrage des raies d'énergie du signal par l'antenne ;
- la figure 4 représente les raies d'énergie du spectre fréquentiel d'une première antenne connue pour carte à puce ;
- la figure 5 représente les raies d'énergie du spectre fréquentiel d'une seconde antenne connue pour carte à puce ;
- la figure 6 représente le spectre fréquentiel cible d'une antenne selon l'invention, montrant 3 pics de résonance ;
- la figure 7 représente un mode de réalisation possible d'une antenne apte à produire le spectre fréquentiel conforme à la figure 6 ;
- la figure 8 représente les pics de résonance obtenus avec l'antenne conforme à la figure 7.

## Description détaillée

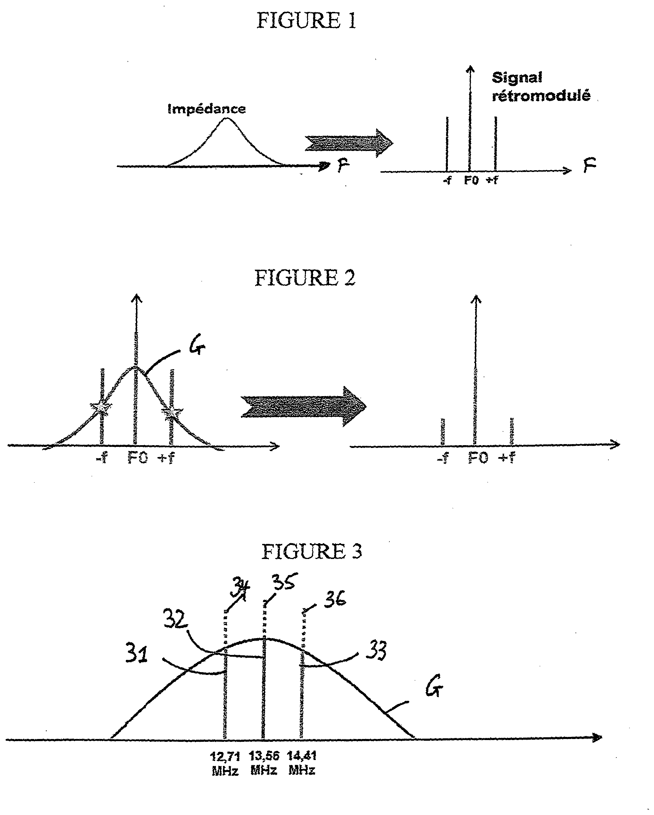

En figure 2 on a représenté à gauche, en ordonnée, l'impédance ou gabarit d'une antenne en fonction de la fréquence, en Mhz, en abscisse. Ce gabarit dépend du circuit électronique équivalent de l'antenne, et en particulier des valeurs des composants RLC constituant l'antenne. Lorsqu'une porteuse de fréquence $F_0$ est modulée par un signal de fréquence f, on obtient un spectre de fréquence du signal modulé avec une raie d'énergie centrale à la fréquence $F_0$ et deux raies latérales aux fréquences $F_0$ + f et $F_0$ - f correspondant aux données du signal modulé par cette antenne. L'amplitude des raies correspond à l'énergie du signal et de la porteuse, exprimée en mVolt.

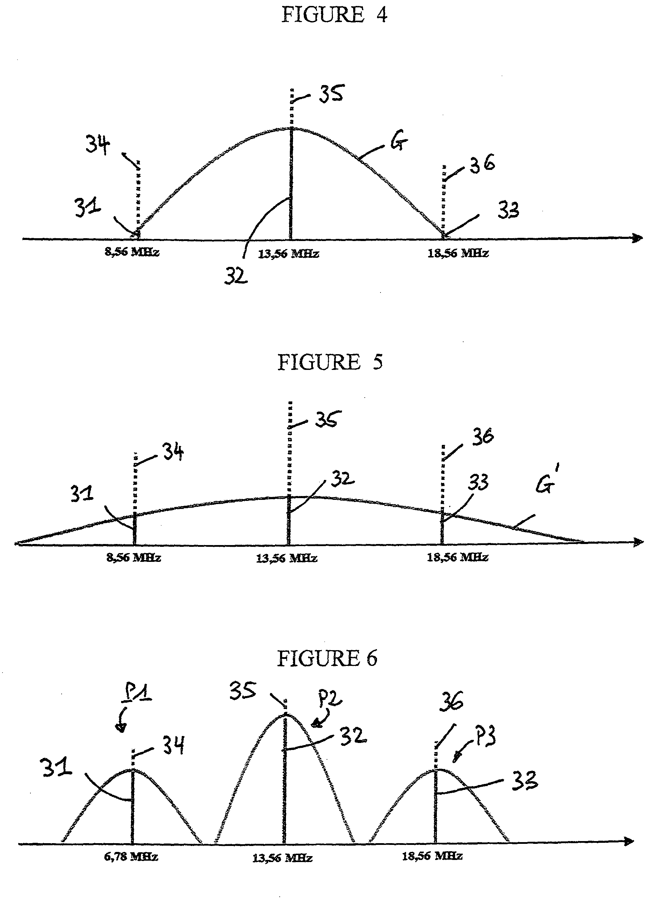

Comme schématisé en figure 3, lorsque les raies latérales et la porteuse sont filtrées par l'antenne, leur amplitude est réduite en fonction du gabarit de l'antenne aux fréquences F0, $F_0$ + f et $F_0$ - f. Autrement dit, l'amplitude des raies qui est située au-dessus du gabarit d'antenne (en pointillé dans les figures 4,5,6) correspond à des pertes, et l'amplitude des raies du spectre fréquentiel qui est située en-dessous du gabarit de l'antenne correspond à l'énergie disponible pour la porteuse et pour les données.

A titre d'exemple pratique, la figure 4 représente les raies d'énergie du spectre fréquentiel d'une antenne connue pour carte à puce, présentant un pic de résonance unique centré sur $F_0$. Comme on le voit, les pertes d'énergie aux fréquences des raies latérales sont d'autant plus importantes que la fréquence f augmente, de sorte que seule une petite partie de l'énergie des raies latérales reste disponible pour la transmission des données à haut débit.

Si pour tenter de remédier à cela, on choisit les composants RLC de cette antenne de manière à obtenir un gabarit d'antenne plus plat comme représenté en figure 5, l'énergie des raies latérales est plus importante qu'en figure 4, mais au détriment de l'amplitude de la raie centrale, qui correspond à l'énergie de la porteuse, donc à la portée de communication.

Il en résulte qu'une antenne connue à pic de résonance unique ne permet pas d'obtenir un bon compromis entre portée et débit de communication, les deux étant liés par l'intermédiaire du gabarit d'antenne.

Afin de remédier à ce problème, l'invention prévoit une conception d'antenne ayant simultanément plusieurs pics de résonance indépendants les uns des autres, à savoir un pic central correspondant à la portée de communication, et des pics latéraux correspondant au débit de la communication, comme schématisé en figure 6. Dans ce cas, l'énergie dévolue aux données et celle consacrée à la porteuse sont dissociées et indépendantes, comme schématisé par les 3 pics de résonance de la figure 6, centrés autour des fréquences $F_0$, $F_0$ + f et $F_0$ - f, de sorte qu'il devient possible d'optimiser séparément la portée et la vitesse de communication.

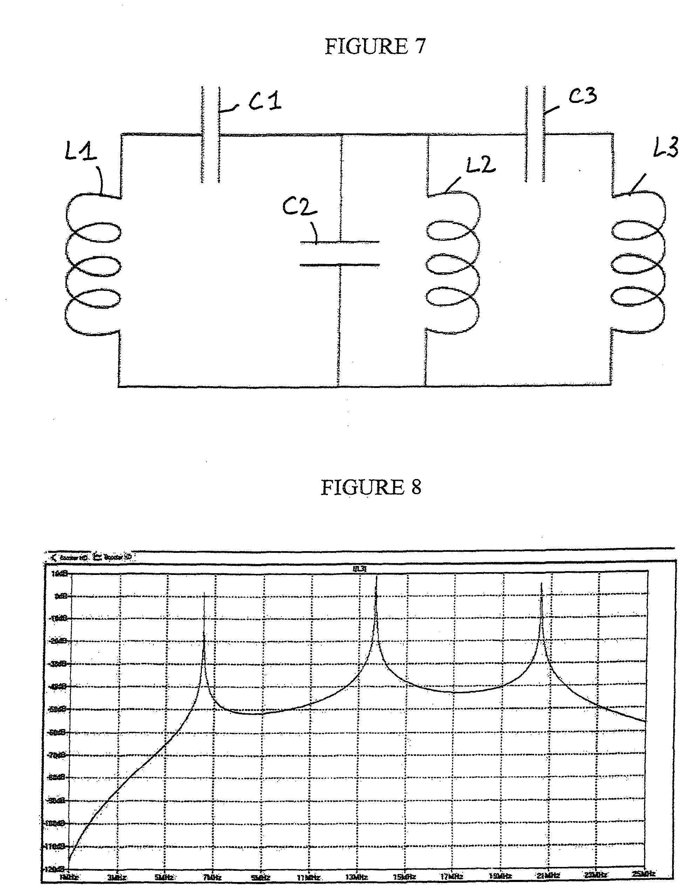

En figure 7 on a représenté un exemple de circuit d'antenne apte à obtenir les pics de résonance de la figure 6. A cet effet, on utilise 3 circuits L,C connectés en parallèle, à savoir un premier circuit résonant (L1,C1) série, un second circuit résonant (L2,C2) parallèle, et un troisième circuit résonant (L3,C3) série.

En figure 8 on a représenté la réponse en fréquence de l'antenne selon la figure 7. En choisissant les valeurs des composants L,C comme suit : L1 = L2 = 2$\mu$H, L3 = 1,5 $\mu$H, C1 = 100 pF, C2 = 40 pF et C3 = 200 pF, on obtient 3 pics de résonance, à savoir un premier pic de résonance au voisinage de 6,78 Mhz, un second pic de résonance au voisinage de 13,56 Mhz et un troisième pic de résonance au voisinage au voisinage de 20,34 Mhz.

Il est à noter que dans le cas où la qualité du signal transmis nécessiterait la transmission de n harmoniques, on obtiendrait suivant les mêmes principes une antenne ayant $1 + 2^n$ pics de résonance.

Par ailleurs, si l'antenne devait être utilisée pour la transmission de plusieurs signaux selon D débits différenciés, on concevrait selon les mêmes principes une antenne ayant un total de D. $(1 + 2^n)$ pics de résonance.

## Avantages de l'invention

En définitive, l'invention propose une conception particulière d'antenne présentant des pics de résonance multiples et ajustables, permettant d'améliorer la qualité du signal transmis, tout en en améliorant également sa portée.

**Revendications**

1. Antenne pour carte à puce sans contact permettant de communiquer avec un lecteur de carte à puce à l'aide d'un signal porteur de fréquence $F_0$ modulé par un signal de données de fréquence f, **caractérisée en ce qu'**elle comporte au moins trois circuits L,C connectés en parallèle de manière à présenter simultanément, pour un débit de communication donné entre la carte à puce et le lecteur, au moins trois pics de résonance, à savoir un premier pic proche de la fréquence de la porteuse $F_0$, et au moins $2^n$ pics latéraux proches des fréquences de transmission des données $F_0 + n.f$ et $F_0 - n.f$, où n représente le nombre d'harmoniques du signal à transmettre.

2. Antenne selon la revendication 1, **caractérisée en ce qu'**elle est configurée pour présenter 3 pics de résonance, situés à $F_0$, $F_0 - f$ et $F_0 + f$.

3. Antenne selon la revendication 2, **caractérisée en ce qu'**elle comporte, connectés en parallèle, un premier circuit résonant (L1,C1) série, un second circuit résonant (L2,C2) parallèle, et un troisième circuit résonant (L3,C3) série.

4. Antenne selon la revendication 1, **caractérisée en ce que** pour une communication selon un nombre D de débits de communication, elle est configurée pour présenter un nombre de pics de résonance égal à $D.(1+2^n)$.

**Patentansprüche**

1. Antenne für kontaktlose Chipkarte, die es ermöglicht, mit einem Chipkartenlesegerät mithilfe eines Trägersignals mit der Frequenz $F_0$, das mit einem Datensignal mit der Frequenz f moduliert ist, zu kommunizieren, **dadurch gekennzeichnet, dass** sie mindestens drei LC-Kreise umfasst, die parallel geschaltet sind, so dass sie bei einer gegebenen Kommunikationsrate zwischen der Chipkarte und dem Lesegerät mindestens drei Resonanzpeaks gleichzeitig aufweist, und zwar einen ersten Peak nahe der Frequenz des Trägers $F_0$ und mindestens $2^n$ seitliche Peaks nahe der Übertragungsfrequenzen der Daten $F_0 + n.f$ und $F_0 - n.f$, wobei n für die Anzahl der Harmonischen des zu übertragenen Signals steht.

2. Antenne nach Anspruch 1, **dadurch gekennzeichnet, dass** sie dazu ausgestaltet ist, 3 Resonanzpeaks aufzuweisen, die bei $F_0$, $F_0 - f$ und $F_0 + f$ liegen.

3. Antenne nach Anspruch 2, **dadurch gekennzeichnet, dass** sie, parallel geschaltet, einen ersten Reihenschwingkreis (L1,C1), einen zweiten Parallelschwingkreis (L2,C2) und einen dritten Reihenschwingkreis (L3,C3) umfasst.

4. Antenne nach Anspruch 1, **dadurch gekennzeichnet, dass** sie bei einer Kommunikation gemäß einer Anzahl D von Kommunikationsraten dazu ausgestaltet ist, eine Anzahl von Resonanzpeaks gleich $D.(1+2^n)$ aufzuweisen.

**Claims**

1. Antenna for a contactless chip card that makes it possible to communicate with a chip card reader by means of a carrier signal at a frequency $F_0$, which is modulated by a data signal at a frequency f, said antenna being **characterized in that** it includes at least three LC circuits connected in parallel so as to simultaneously have, for a given communication rate between the chip card and the reader, at least three resonant peaks, namely a first peak close to the carrier frequency $F_0$, and at least $2^n$ lateral peaks close to the data transmission frequencies $F_0 + n.f$ and $F_0 - n.f$, where n represents the number of harmonics of the signal to be transmitted.

2. Antenna according to Claim 1, **characterized in that** it is configured to have 3 resonant peaks located at $F_0$, $F_0 - f$ and $F_0 + f$.

3. Antenna according to Claim 2, **characterized in that** it includes, connected in parallel, a first, series resonant circuit (L1, C1), a second, parallel resonant circuit (L2, C2), and a third, series resonant circuit (L3, C3).

4. Antenna according to Claim 1, **characterized in that**, for a communication at a number D of communication rates, it is configured to have a number of resonant peaks equal to $D.(1+2^n)$.

## FIGURE 1

## FIGURE 2

## FIGURE 3

FIGURE 4

FIGURE 5

FIGURE 6

FIGURE 7

FIGURE 8

**EP 3 452 957 B1**

## RÉFÉRENCES CITÉES DANS LA DESCRIPTION

**Documents brevets cités dans la description**

- EP 2128804 A1

- US 20120001814 A1